(19) Europäisches Patentamt
European Patent Office
Office européen des brevets

(11) EP 4 111 188 B1

(12) EUROPEAN PATENT SPECIFICATION

(45) Date of publication and mention of the grant of the patent:
**30.07.2025 Bulletin 2025/31**

(21) Application number: **21702382.9**

(22) Date of filing: **19.01.2021**

(51) International Patent Classification (IPC):
***G01N 27/327*** *(2006.01)*

(52) Cooperative Patent Classification (CPC):
**G01N 27/3277;** G01N 27/3272

(86) International application number:
**PCT/EP2021/051075**

(87) International publication number:
**WO 2021/170313 (02.09.2021 Gazette 2021/35)**

# (54) POTENTIOMETRIC HYDROGEN PEROXIDE SENSOR

POTENTIOMETRISCHER WASSERSTOFFPEROXID-SENSOR

CAPTEUR DE PEROXYDE D'HYDROGÈNE POTENTIOMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2020 EP 20382133**

(43) Date of publication of application:
**04.01.2023 Bulletin 2023/01**

(73) Proprietor: **UNIVERSIDAD ROVIRA I VIRGILI (URV)**
**43003 Tarragona (ES)**

(72) Inventors:
- **ANDRADE, Francisco Javier**
  **43007 Tarragona (ES)**
- **BLANKING, Pär Robert Erik William**
  **43007 Tarragona (ES)**
- **BLONDEAU, Pascal**
  **43003 Tarragona (ES)**
- **HOEKSTRA, Rafael Wytze Fenwick**
  **43007 Tarragona (ES)**
- **BAEZ VASQUEZ, Jhonattan Frank**
  **43007 Tarragona (ES)**

(74) Representative: **Hoffmann Eitle**
**Hoffmann Eitle S.L.U.**
**Paseo de la Castellana 140, 3a planta**
**Edificio LIMA**
**28046 Madrid (ES)**

(56) References cited:

| | |
|---|---|
| **US-A- 5 312 590** | **US-A1- 2004 134 780** |
| **US-A1- 2007 042 377** | **US-A1- 2017 184 537** |

- **BAEZ JHONATTAN F ET AL: "Controlling the mixed potential of polyelectrolyte-coated platinum electrodes for the potentiometric detection of hydrogen peroxide", ANALYTICA CHIMICA ACTA, ELSEVIER, AMSTERDAM, NL, vol. 1097, 13 November 2019 (2019-11-13), pages 204 - 213, XP085974484, ISSN: 0003-2670, [retrieved on 20191113], DOI: 10.1016/ J.ACA.2019.11.018**
- **WEI-CHE LEE ET AL: "Simple fabrication of glucose biosensor based on Graphene-Nafion composite by amperometric detections", 2013 IEEE SENSORS, IEEE, 28 October 2012 (2012-10-28), pages 1 - 4, XP032308614, ISSN: 1930-0395, DOI: 10.1109/ICSENS.2012.6411155**
- **TANMAY KULKARNI ET AL: "Application of Semipermeable Membranes in Glucose Biosensing", MEMBRANES, vol. 6, no. 4, 14 December 2016 (2016-12-14), CH, pages 55, XP055600232, ISSN: 2077-0375, DOI: 10.3390/ membranes6040055**
- **HONG LIU ET AL: "Paper-Based Electrochemical Sensing Platform with Integral Battery and Electrochromic Read-Out", ANALYTICAL CHEMISTRY, vol. 84, no. 5, 6 March 2012 (2012-03-06), pages 2528 - 2532, XP055389163, ISSN: 0003-2700, DOI: 10.1021/ac203457h**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 111 188 B1

## Description

### Technical field of the invention

The present invention pertains to the medical field, particularly to the detection of hydrogen peroxide in test or clinical samples by using potentiometric sensors. More particularly, the present invention solves the problem of providing a potentiometric sensor devices for the detection of chemical species in solution with a novel configuration.

### Background of the invention

The mixed potential (MP) of the Pt electrode is used to explain the potentiometric response to hydrogen peroxide and the use of specific polyelectrolyte coatings is herein presented as a way to control the kinetic processes that lead to the resting potential of the electrode (Baez et al. Analytica Chimica Acta 1097 (2020) 204-213). It is well known that -like with many other metals- the resting potential of a Pt electrode in an electrolyte solution is not under equilibrium, but under a mixed potential (MP) regime, where oxidation (electron-generating) and reduction (electronscavenging) reactions create anodic ($i_a$) and cathodic ($i_c$) exchange currents. Each one of these currents can be described by their Butler-Volmer equation:

$$i_k = i_k^o\left(e^{\frac{\alpha_k n_k F \eta_k}{RT}} - e^{\frac{(1-\alpha_k) n_k F \eta_k}{RT}}\right)$$

where the subscript "k" identifies a given reaction, $i_k$ is the total current, $i_k^o$ is the exchange current density, $\alpha_k$ is the symmetry factor, $n_k$ is the number of electrons exchanged in the rate-limiting step. The driving force of the reaction -the overpotential ($\eta_k$)- is the difference between the resting potential of the electrode (E) and the equilibrium potential of the reaction ( $E_k^o$ ) under study, and *F,* R and *T are* the Faraday's constant, universal gas constant and the absolute temperature, respectively. For large enough overpotential one of the directions of the reaction becomes negligible, i.e., the cathodic component of the anodic exchange current and the anodic component of the cathodic exchange current can be ignored. Therefore, the above equation can be then reduced to the Tafel approximation. Assuming that only one reaction contributes to each process, exchange currents can be expressed as:

$$i_a = i_a^o e^{\frac{\alpha_a n_a F \eta_a}{RT}}$$

$$i_c = i_c^o e^{\frac{(1-\alpha_c) n_c F \eta_c}{RT}}$$

When the value of potential is evaluated for the condition $i_a^o + i_c^o = 0$ , the MP of the system can be obtained. Then, under a MP regime there is a net non-zero value of overpotential ($\eta$) that reaches a steady state due to a zero-value of the total current. Because of this, the OCP ((Open Circuit Potential (OCP) which is a passive method also known as open circuit voltage, zero-current potential, corrosion potential, equilibrium potential, or rest potential, which is often used to find the resting potential of a system, from which other experiments are based) of these system does not show a Nernstian dependence, but it is controlled by the Tafel relationships that describe the exchange currents. Tafel equations are often expressed in the linear form:

$$E_a = K_a + \beta_a \log(i_a),\ \beta_a = 2.303\,\frac{RT}{\alpha_a n_a F}$$

$$E_c = K_c + \beta_c \log(i_c), \beta_c = 2.303\,\frac{RT}{(1-\alpha)_c n_c F}$$

where $E_a$ and $E_c$ are the electrode potential calculated for the anodic or cathodic exchange currents, $K_a$ and $K_c$ include a series of parameters and constant terms for each reaction and $\beta_a$ and $\beta_c$ are the Tafel slopes for the anodic and cathodic processes. Typically, for $\alpha$=0.5, expected Tafel slopes are 120 and 60 mV for one-electron and 2-electron transfer,

respectively. However, additional factors that lead to more complex reaction mechanisms require corrections to the Tafel equation that result in a wider range of slopes.

Tafel slopes are key to understand the potentiometric response of these MP systems, since the OCP is linked to changes of the exchange currents. Any perturbation that leads to the readjustment of the exchange currents will result in a change of the electrode potential according to their Tafel plots, such as the exposure of the WE (working electrode) to the solution containing the chemical entity to be tested. This is the reason why the OCP of many metal electrodes -including Pt- respond to the dissolved oxygen concentration. The oxygen reduction reaction (ORR):

$$O_2 + 4H^+ + 4e^- \rightarrow 2H_2O \qquad (E^o = 1.23\ V)$$

is one of the main contributors to the $i_c$ in the MP of many metals. Thus, changes on the concentration of $O_2$ modify $i_c$, forcing the system to reach a new MP. The sensitivities for dissolved $O_2$ -120 mV/decade for some bronzes, 40mV/decade for Co, and 56 to 80 mV/decade for Cu- reflect the different kinetic conditions of this reaction, that yield different Tafel slopes. While the use of these metals as dissolved oxygen sensors has been proposed, a strict control over other factors affecting the exchange current - such as blocking the active sites on the electrode, modifications of the surface, adsorptions, etc is required. For example, a potentiometric phosphate sensor based on the modifications of the exchange currents produced by phosphate anions on a cobalt oxide surface has been reported (Meruva and Meyerhoff, Anal Chem 1996, 68, 2022-2026). This is one of the major powers -and also the major weakness- of these mixed potential systems. From one side, they can offer great versatility, and potentially great sensitivity. From the other, they show strong dependence on several environmental factors that must be carefully controlled to be analytically useful.

In the case of Pt electrodes, the two major factors to consider when analyzing the MP are the cathodic and anodic exchange current, from one side, and the surface condition, from the other. Regarding the cathodic process, the strong dependence of the OCP with the concentration of dissolved $O_2$ evidences the major contribution of the ORR to the $i_c$. As a reduction reaction, the ORR acts removing electrons. Thus, a decrease of the ORR rate is reflected as drop of the electrode potential. Conversely, increasing the rate of this reaction drives the potential to higher values. The anodic reaction, on the other hand, is usually associated with the oxidation of Pt on the surface of the electrode. It has been reported that this reaction has a very low Tafel slope, which in practical terms means that the OCP of the Pt electrode will be mostly controlled by the cathodic process. Thus, Tafel slopes of the ORR will play a key role determining the sensitivity of the OCP. What is more relevant about the anodic process, though, is that it generates a layer of PtO, which inhibits the ORR, as it will be discussed below.

The ORR on Pt has received significant attention during the last decades because it is the limiting factor in the improvement of the performance of fuel cells (I Katsounaros, WB Schneider, JC Meier, U Benedikt, PU Biedermann, AA Auer, KJJ Mayrhofer, Phys. Chem. Chem. Phys., 2012, 14, 7384). The actual mechanism of the reaction is not fully elucidated, and the evidence suggest that different reaction pathways may occur depending on the conditions. The ORR on Pt is sluggish and does not proceed in a reversible way. As a multi-electron reaction, the ORR includes a number of elementary steps with different intermediaries (NM markovic, PN Ross Jr, Surface Science Reports 2002, 45, 117). Oxygen may be directly reduced to water (the 4-electron pathway) or be first reduced to hydrogen peroxide, which in turn may undergo different reactions. The most recent models and experimental evidence suggest that the mechanism of the ORR involves a first step of adsorption of $O_2$ onto Pt. Then a one-electron transfer is the rate-limiting step. Under these conditions, a Tafel slope of 120mV/decades (Markovic et al.) can be expected. Nevertheless, a number of factors may affect the reaction kinetics. Therefore, Tafel slopes of 60 and 120 mV/decade are typically reported, but values ranging from 40 to 80 mV/decade can be also found.

Since the first step of the reaction is the adsorption of $O_2$, the surface condition of the Pt electrode has a strong influence on the MP. Competitive adsorption of species on Pt has been studied by Markovic and Ross, who evaluated the ORR in the presence of sulphate and chloride anions. The effect of this spectator species on Pt has been also recently reviewed. In general, the adsorption of anions on the surface of the metal blocks the adsorption of oxygen, decreasing the ORR, and therefore affecting the MP. Evidently, from an analytical standpoint, this is a severe limitation for the use of bare Pt electrodes in solution, since the matrix will produce a significant and variable degree of interference.

Some of the most severe inhibitory effect on the ORR is produced by the presence of oxygenated species. The absorption of hydroxide groups, for example, blocks the active sites for the ORR. For this reason, a key factor controlling the electrochemical behavior of Pt is the surface oxide coverage. It has been long known that a clean Pt surface immersed in an aqueous solution is unstable, and it quickly oxidizes the first layers of metal until a stable potential is reached. Thus, Pt presents a potential-dependent surface oxide coverage, which has an inhibitory effect on the ORR, since $O_2$ requires clean Pt sites to adsorb. The generation of this oxide layer part of the mixed potential, since it is involved in the $i_a$. The anodic processes have traditionally received less attention, probably due to the lower kinetic impediments that it presents show. The metal oxidation:

$$2Pt + O_2 \rightarrow 2PtO \text{ (E°= 0.88)}$$

is a fundamental part of the chemistry of Pt in aqueous solutions.

Summarizing, the OCP of a Pt electrode (or a gold or cobalt electrode) is produced by a MP mechanism, where the ORR plays a fundamental role. Under ideal conditions, the kinetics of the ORR is controlled by the oxygen adsorption on free Pt sites available (and/or the change on the energy for adsorption of reaction intermediaries) followed by one electron transfer yield a Tafel slope of 120 mV. Nevertheless, surface effect will play an important role inhibiting the ORR. In particular, a potential-dependent surface oxide coverage will have a critical influence, since the total quantity and nature of the surface oxide species being reduced (degree of surface oxidation) has influence on the measured potential. Oxidecoverage factors have also been used to explain values of Tafel slopes below 120 mV/decades.

Interestingly, one of the oxygenated species that may block the ORR is the hydrogen peroxide. This molecule, which can be also found as intermediary in the ORR (depending on the reaction conditions) is weakly adsorbed in the surface on Pt, blocking free, active sites. Katsounaros has stressed the nonelectrochemical nature of the interaction of peroxide with Pt. The OCP of a bare Pt electrode before and after the addition of peroxide produces a drop of the electrode potential. The drop of the electrode potential is the result of the blocking of the ORR, and not a redox reaction, as it has been previously proposed. While in principle this response could be used with analytical purposes, it is clear that the influence of the media would have a major effect on the response. Any increase on the concentration of anions will lead to a higher degree of adsorption of foreign species and a decrease on the response. Last, but not least, a characteristic of the MP is that there is a continuous generation and consumption of chemical species at the surface of the electrode, which make these systems highly dependent on the mass transport phenomena. Any analytically useful approach would optionally improve by stabilizing the concentration of gradients on the surface of the electrode and minimize the interference effect of foreign species.

In the present invention, we use the mixed potential (MP) of the Pt, gold or cobalt electrode (or any mixture thereof) to provide a potentiometric response to hydrogen peroxide related compounds by using a non-traditional potentiometric approach. In the traditional approach and for the detection of chemical species in solution by using potentiometric sensors or cells, and as reflected in figure 5, two electrodes must be in contact with the solution, in particular the working electrode and the reference electrode must be in contact with the solution. Such requirement makes these systems very dependent on the correct selection of the working and the reference electrodes used for the system to efficiently work.

However, in the present invention, instead of using a solution to close the circuit between the two electrodes (the working electrode (WE) and the reference electrode (RE)), the results presented herein confirm that a potentiometric sensor or cell can use a polyelectrolyte bridge, such as a Nafion polyelectrolyte bridge, to connect the WE and RE instead of the electrolyte solution that is tested, and that such polyelectrolyte bridge effectively closes the circuit and allows detecting $H_2O_2$. Such a system is not as dependent on the selection of a very specific reference electrode and can be easily miniaturize. To the best of our knowledge, this is the first report for this kind of configuration for the detection of chemical species in solution, a schematic view of such configuration is provided in figure 6.

### Description of the invention

As already indicated, the present invention confronts the problem that for the detection of chemical species in solution by using potentiometric sensors or cells, two electrodes must be in contact with the solution, in particular the working electrode and the reference electrode must be in contact with the solution. Such requirement makes these systems very dependent on the correct selection of the working and the reference electrodes used for the system to efficiently work. The present invention resolves this problem by connecting each of the electrodes of a potentiometric sensor or cell, by a polyelectrolyte bridge provided between the electrodes, wherein the surfaces of each of the electrodes that contact the polyelectrolyte bridge provided between the electrodes permits to effectively close the potentiometric circuit. By effectively closing the potentiometric circuit by using the polyelectrolyte bridge instead of the solution, such potentiometric sensors or cells are not as dependent on the selection of a very specific reference, and also working, electrode and can be easily miniaturize.

That is, although traditionally potentiometric measurements require the use of two electrodes (a measuring (working) and a reference electrode) which are connected by an electrolyte solution; in the present invention, such measurements require the use of two electrodes (a measuring (working) and a reference electrode) which are connected by a polyelectrolyte bridge instead of the electrolyte solution to be tested. A voltmeter will then usually measure the electrical potential difference between the two electrodes, and the voltage will be related to the concentration of the analyte, which presence and/or concentration is being determined.

An example not according to the invention refers to an *in vitro* use of a potentiometric sensor or cell to, preferably selectively and directly, determine the concentration of hydrogen peroxide in an aqueous solution, wherein the potentiometric sensor or cell comprises:

1. A reference electrode comprising a support which in turn comprises a conductive material; and
2. A hydrogen peroxide selective electrode comprising a porous redox sensitive surface consisting of platinum or gold,

wherein each of the electrodes is connected to the other by a polyelectrolyte bridge provided between the electrodes, wherein the surfaces of each of the electrodes that contact the polyelectrolyte bridge provided between the electrodes permits to effectively close the potentiometric circuit; and

wherein the use is characterized in that the aqueous solution is in direct contact with the working electrode, and in that instead of using the aqueous solution to close the potentiometric circuit between the two electrodes, the hydrogen peroxide selective electrode and the reference electrode (RE), the potentiometric cell uses the polyelectrolyte bridge to connect the electrodes.

It is noted that, in this aspect or in any of its related embodiments, the hydrogen peroxide selective electrode comprising a porous redox sensitive surface consisting of platinum or gold, could be optionally replaced by a phosphate (or phosphate related compounds) selective electrode comprising a porous redox sensitive surface consisting of cobalt. By "phosphate related compounds" is herein understood as inorganic (PO4, H2PO4, HPO4) and organic, such as adenosine 5-triphosphate (ATP), adenosine 5-diphosphates (ADP) and higher molecular weight nucleotides, phosphate compounds.

It is further noted that, in the context of the present invention, the term "aqueous solution" or "electrolyte solution" is preferably understood as a biological fluid such as whole blood, preferably undiluted whole blood, intracellular fluids, saliva, cerebrospinal fluid, blood sera, blood plasma, sweat and urine. More preferably, said solution is whole blood, in particular undiluted whole blood. It is particularly important to highlight that the above-mentioned use, according to the novel configuration, allows detection in reduced volumes such as shown in Figure 2 right. The use is preferably performed in a single drop, of preferably about 50 μL, reducing the volume 2 orders of magnitude. Noteworthy further reduction of volume down to the single μL is possible based on the geometry optimization. The drop use for the detection does not have to create a bridge between the two electrodes, however, it must be in contact with at least the working electrode.

In an embodiment of the example, the hydrogen peroxide selective electrode is positioned directly above the reference electrode.

In another preferred embodiment of the example the hydrogen peroxide selective electrode comprises a porous redox sensitive surface consisting of platinum.

In another embodiment of the example, the polyelectrolyte bridge connecting the electrodes comprises or is made of perfluorosulfonic acid ionomers.

In another embodiment of the example the polyelectrolyte bridge connecting the electrodes comprises or is made of Nafion or Aquivion, preferably Nafion.

In another embodiment of the example, the reference electrode comprises a support which in turn comprises a conductive material selected from any of the following list consisting of: silver, platinum, gold, nickel, zinc, copper, aluminum and carbon.

In another embodiment of the example the reference electrode and the hydrogen peroxide selective electrode are made of the same material, preferably gold or platinum.

In another embodiment of the example, the polyelectrolyte bridge connecting the electrodes comprises, consists of or is made of polyelectrolytes such as perfluorosulfonic acid ionomers or polyammonium ionomers. Preferred polyelectrolytes are those selected from the list consisting of Nafion, Polyethylenimine (PEI) or polyaziridine, wherein polyaziridine is a polymer with repeating units composed of the amine group and two carbon aliphatic CH2CH2 spacer.

In another preferred embodiment of the example, two PFSA (Perfluorosulfonic acid) ionomers in the acid form can be preferably used for the polyelectrolyte bridge: a long side chain PFSA; Nafion™ NR-40 with an Equivalent Weight EW=1000 g/eq, or a short side chain PFSA Aquivion™ with EW=830 g/eq.

Perfluorosulfonic acid (PFSA) ionomers are polymers having a chemical moiety of the Formula (I):

(I)

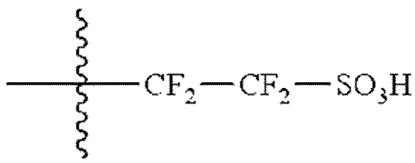

A preferred class of perfluorosulfonic acid ionomers are PFSA-polytetrafluoroethylene copolymers of Formula

(II),

(II)

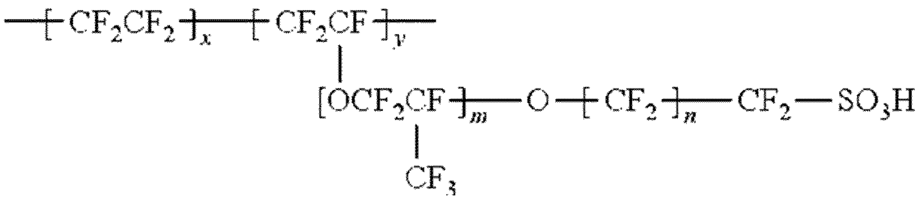

where x, y, m and n represent the numbers of repeat units. x and y are the numbers for tetrafluoroethylene and perfluorosulfonic acid repeat units respectively and m and n are the repeat units in the side chains of perfluorosulfonic acid blocks. x and y are equivalent weight dependent. For Nafion™ ionomer, a PFSA known in the art, the relationship between equivalent weight (EW) and m is EW=100x+446 so that the side chains are separated by around 14 $CF_2$ units in an ionomer with EW=1100. Preferably, the number of repeat units x and y are such that there are less than 15 × units for each y and the value of m and n are integers between 0 and 5. Examples of PFSA copolymers known in the art are Nafion™: m=1 and n=1, Flemion™: m=0 or 1 and n=1 to 5, Aciplex™: m=0 or 3 and n=2 to 5, 3M™ ionomer: m=0 and n=2, Aquivion™: m=0 and n=1.

In yet another preferred embodiment of the example the hydrogen peroxide selective electrode comprises a porous redox sensitive surface consisting of platinum or gold and at least one layer of a proton exchange membrane on said redox sensitive surface, wherein said layer of a proton exchange membrane comprises a copolymer of Formula (II),

(II)

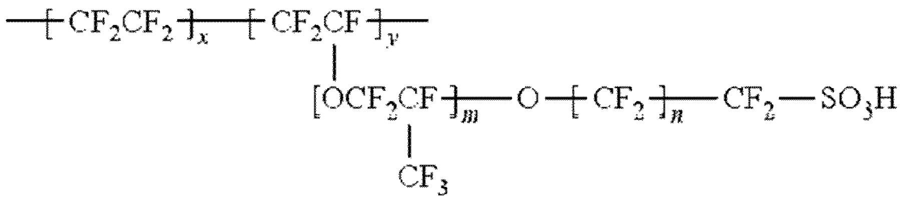

wherein x, y, m and n represent the numbers of repeat units, wherein m=0, n=1 and wherein the number of repeat units x and y are such that there are less than 15 x units for each y. Preferably, said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15× units for each y. Preferably, said layer of a proton exchange membrane further comprises a glucose oxidase entrapped therein or any oxidase with hydrogen peroxide as its product.

Furthermore, a yet further preferred embodiment of the example refers to the in vitro use of the previous aspect of the example, wherein said potentiometric sensor or cell preferably comprises a support made of paper which in turn comprises the selective electrode and the reference electrode, thus providing a paper-based sensor. It is however noted that other supports such as plastic, rubber, and textile can be used to practice the present invention. It is, of course, further noted that such paper-based sensors can be, for example, used to selectively and directly determine the concentration of hydrogen peroxide in an aqueous solution, wherein preferably said aqueous solution is a biological fluid such as whole blood, preferably undiluted whole blood, intracellular fluids, saliva blood sera and urine. In particular, said selective and direct determination of the concentration of hydrogen peroxide in an aqueous solution in turn determines the concentration of glucose, galactose, cholesterol, uric acid, lactic acid and amino acid in said solution.

A first aspect of the present invention refers to an *in vitro* method to, preferably selectively and directly, determine the concentration of hydrogen peroxide in an aqueous solution, the method comprising;

a. providing the aqueous solution in contact with the hydrogen peroxide selective electrode of a potentiometric sensor or cell comprising:

i. A reference electrode comprising a support which in turn comprises a conductive material; and

ii. A hydrogen peroxide selective electrode comprising a porous redox sensitive surface consisting of platinum or gold,

wherein the hydrogen peroxide selective electrode is preferably positioned directly above the reference electrode,

wherein each of the electrodes is connected to the other by a polyelectrolyte bridge provided between the electrodes, wherein the surfaces of each of the electrodes that contact the polyelectrolyte bridge provided between the electrodes permits to effectively close the potentiometric circuit; and

wherein the polyelectrolyte bridge connecting the electrodes comprises or is made of polyelectrolytes such as perfluorosulfonic acid ionomers or polyammonium ionomers; and

b. measuring a potential difference between the reference electrode and the hydrogen peroxide selective electrode; and

c. determining a concentration of hydrogen peroxide in the aqueous solution by evaluating the potential difference, preferably by using a voltmeter;

wherein the method is characterized in that instead of using the aqueous solution to close the potentiometric circuit between the two electrodes, the hydrogen peroxide selective electrode and the reference electrode (RE), the potentiometric cell uses the polyelectrolyte bridge to connect the electrodes instead of the solution.

It is noted that, in this aspect of the invention or in any of its related embodiments, the hydrogen peroxide selective electrode comprising a porous redox sensitive surface consisting of platinum or gold, could be optionally replace by a phosphate (or phosphate related compounds) selective electrode comprising a porous redox sensitive surface consisting of cobalt.

In a preferred embodiment of this first aspect of the invention, the hydrogen peroxide selective electrode comprises a porous redox sensitive surface consisting of platinum.

In another preferred embodiment of this first aspect of the invention, the polyelectrolyte bridge connecting the electrodes comprises or is made of perfluorosulfonic acid ionomers.

In another preferred embodiment of this first aspect of the invention, the polyelectrolyte bridge connecting the electrodes comprises or is made of Nafion or Aquivion, preferably Nafion.

In another preferred embodiment of this first aspect of the invention, the reference electrode comprises a support which in turn comprises a conductive material selected from any of the following list consisting of: silver, platinum, gold, nickel, zinc, copper, aluminum and carbon.

In another preferred embodiment of this first aspect of the invention, the reference electrode and the hydrogen peroxide selective electrode are made of the same material, preferably gold or platinum.

In yet another preferred embodiment of this first aspect of the invention, the hydrogen peroxide selective electrode comprises a porous redox sensitive surface consisting of platinum or gold and at least one layer of a proton exchange membrane on said redox sensitive surface, wherein said layer of a proton exchange membrane comprises a copolymer of Formula (II),

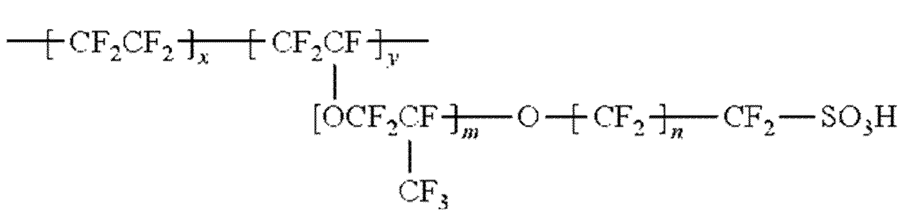

(II)

wherein x, y, m and n represent the numbers of repeat units, wherein m=0, n=1 and wherein the number of repeat units x and y are such that there are less than 15x units for each y. Preferably, said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15× units for each y. Preferably, said layer of a proton exchange membrane further comprises a glucose oxidase entrapped therein or any oxidase with hydrogen peroxide as its product.

Furthermore, a yet further preferred embodiment of this first aspect of the invention refers to the in vitro method of the previous aspect of the invention, wherein said potentiometric sensor or cell preferably comprises a support made of paper which in turn comprises the selective electrode and the reference electrode, thus providing a paper-based sensor. It is however noted that other supports such as plastic, rubber, and textile can be used to practice the present invention. It is, of course, further noted that such paper-based sensors can be, for example, used to selectively and directly determine the concentration of hydrogen peroxide in an aqueous solution, wherein preferably said aqueous solution is a biological fluid such as whole blood, preferably undiluted whole blood, intracellular fluids, saliva blood sera and urine. In particular, said selective and direct determination of the concentration of hydrogen peroxide in an aqueous solution in turn determines the concentration of glucose, galactose, cholesterol, uric acid, lactic acid and amino acid in said solution.

An example not according to the invention refers to a potentiometric sensor or cell suitable for selectively

measuring chemical species such as hydrogen peroxide or phosphate related compounds in solution, which comprises:

a. A reference electrode comprising a support which in turn comprises a conductive material such as silver, platinum, gold, nickel, zinc, copper, aluminum or carbon; and
b. A hydrogen peroxide selective electrode comprising a porous redox sensitive surface consisting of platinum or gold, or a phosphate (or phosphate related compounds) selective electrode comprising a porous redox sensitive surface consisting of cobalt;

wherein the electrodes are preferably positioned directly above the other, and wherein each of the electrodes is connected to the other by a polyelectrolyte bridge provided between the electrodes.

In a preferred embodiment of this example, the polyelectrolyte bridge connecting the electrodes comprises, consists of or is made of polyelectrolytes such as perfluorosulfonic acid ionomers or polyammonium ionomers. Preferred polyelectrolytes are those selected from the list consisting of Nafion, Polyethylenimine (PEI) or polyaziridine, wherein polyaziridine is a polymer with repeating units composed of the amine group and two carbon aliphatic CH2CH2 spacer.

In another preferred embodiment of this example, two PFSA (Perfluorosulfonic acid) ionomers in the acid form can be preferably used for the polyelectrolyte bridge: a long side chain PFSA; Nafion™ NR-40 with an Equivalent Weight EW=1000 g/eq, or a short side chain PFSA Aquivion™ with EW=830 g/eq.

As already mentioned, a preferred class of perfluorosulfonic acid ionomers are PFSA-polytetrafluoroethylene copolymers of Formula (II),

(II)

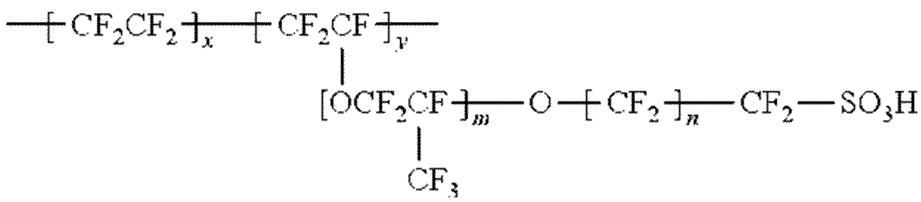

where x, y, m and n represent the numbers of repeat units. x and y are the numbers for tetrafluoroethylene and perfluorosulfonic acid repeat units respectively and m and n are the repeat units in the side chains of perfluorosulfonic acid blocks. x and y are equivalent weight dependent. For Nafion™ ionomer, a PFSA known in the art, the relationship between equivalent weight (EW) and m is EW=100x+446 so that the side chains are separated by around 14 $CF_2$ units in an ionomer with EW=1100. Preferably, the number of repeat units x and y are such that there are less than 15 × units for each y and the value of m and n are integers between 0 and 5. Examples of PFSA copolymers known in the art are Nafion™: m=1 and n=1, Flemion™: m=0 or 1 and n=1 to 5, Aciplex™: m=0 or 3 and n=2 to 5, 3M™ ionomer: m=0 and n=2, Aquivion™: m=0 and n=1.

An example not according to the invention refers to a potentiometric sensor or cell suitable for selectively measuring hydrogen peroxide or phosphate related compounds in solution, which comprises:

a. A reference electrode comprising a support which in turn comprises a conductive material such as silver, platinum, gold, nickel, zinc, copper, aluminum or carbon; and
b. A hydrogen peroxide selective electrode comprising a porous redox sensitive surface consisting of platinum or gold and at least one layer of a proton exchange membrane on said redox sensitive surface; or a phosphate related compounds selective electrode comprising a porous redox sensitive surface consisting cobalt and at least one layer of a proton exchange membrane on said redox sensitive surface,

wherein the electrodes are preferably positioned directly above the other, and wherein each of the electrodes is connected to the other by a polyelectrolyte bridge provided between the electrodes; and wherein said layer of a proton exchange membrane comprises a copolymer of Formula (II),

(II)

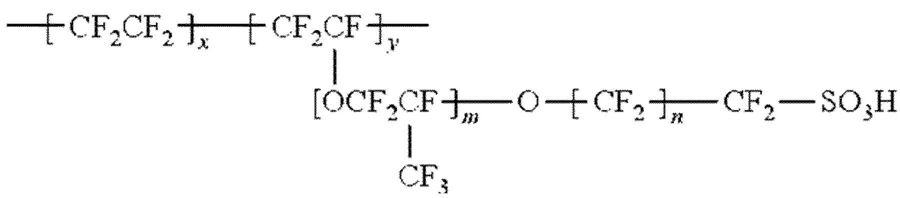

wherein x, y, m and n represent the numbers of repeat units, wherein m=0, n=1 and wherein the number of repeat units x and y are such that there are less than 15× units for each y.

Such layer of a proton exchange membrane aids at stabilizing the concentration of gradients on the surface of the electrode and minimize the interference effect of foreign species.

Preferably, the layer of a proton exchange membrane described in any of the above embodiments of the third aspect of the invention, further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15 × units for each y.

In yet another preferred embodiment of this example or of any of its preferred embodiments, the layer/s of a proton exchange membrane further comprises a glucose oxidase entrapped therein or any oxidase with hydrogen peroxide as its product.

A still further preferred embodiment of this example refers to a potentiometric sensor or cell capable of selectively measuring hydrogen peroxide in an aqueous solution comprising a selective electrode and a reference electrode, wherein the selective electrode comprises a redox sensitive surface consisting of platinum or gold and optionally at least one layer of a proton exchange membrane on said redox sensitive surface as defined in the different embodiments of this aspect of the example. Preferably, said hydrogen peroxide potentiometric cell comprises:

a. A reference electrode comprising a conductive material such as Ag/AgCl onto which a membrane comprising sodium chloride and PVB dissolved in an appropriate solvent such as methanol is deposited; and

b. A hydrogen peroxide selective electrode comprising a redox sensitive surface consisting of platinum or gold and at least one layer of a proton exchange membrane on said redox sensitive surface as defined in the first aspect of the invention or in any of its preferred embodiments.

It is noted that PVB or Butvar B-98 is understood as polyvinyl butyryl having a molecular weight between 40000-70000 g/mol with butyryl content between 78 and 80% weight per total weight of the polyvinyl butyryl (w/w), hydroxyl content between 18 and 20% (w/w) and acetate less than 2.5%, preferably between 1.5 and 2.5% (w/w).

A more particular alternative embodiment of this example refers to a potentiometric sensor or cell to, preferably selectively and directly, determine the concentration of hydrogen peroxide in an aqueous solution, wherein the potentiometric sensor or cell comprises:

i. A reference electrode comprising a support which in turn comprises a conductive material; and

ii. A hydrogen peroxide selective electrode comprising a porous redox sensitive surface consisting of platinum or gold,

wherein each of the electrodes is connected to the other by a polyelectrolyte bridge provided between the electrodes, wherein the surfaces of each of the electrodes that contact the polyelectrolyte bridge provided between the electrodes permits to effectively close the potentiometric circuit, so that instead of using the aqueous solution to close the potentiometric circuit between the two electrodes, the hydrogen peroxide selective electrode and the reference electrode (RE), the potentiometric cell uses the polyelectrolyte bridge to connect the electrodes.

In a preferred embodiment of this alternative embodiment, the potentiometric cell is configured so that the aqueous solution is in contact with the hydrogen peroxide selective electrode and does not close the potentiometric circuit between the two electrodes. See figure 6, wherein the aqueous solution is primarily in contact with the hydrogen peroxide selective electrode.

In another preferred embodiment of this alternative embodiment, the hydrogen peroxide selective electrode comprises a porous redox sensitive surface consisting of platinum.

In another preferred embodiment of this alternative, the polyelectrolyte bridge connecting the electrodes comprises or is made of perfluorosulfonic acid ionomers.

In another preferred embodiment of this alternative embodiment, the polyelectrolyte bridge connecting the electrodes comprises or is made of Nafion or Aquivion, preferably Nafion.

In another preferred embodiment of this alternative embodiment of the invention, the reference electrode comprises a support which in turn comprises a conductive material selected from any of the following list consisting of: silver, platinum, gold, nickel, zinc, copper, aluminum and carbon.

In another preferred embodiment of this alternative embodiment of the invention, the reference electrode and the hydrogen peroxide selective electrode are made of the same material, preferably gold or platinum.

In yet another preferred embodiment of this alternative embodiment, the hydrogen peroxide selective electrode comprises a porous redox sensitive surface consisting of platinum or gold and at least one layer of a proton exchange membrane on said redox sensitive surface, wherein said layer of a proton exchange membrane comprises a copolymer of Formula (II),

(II)

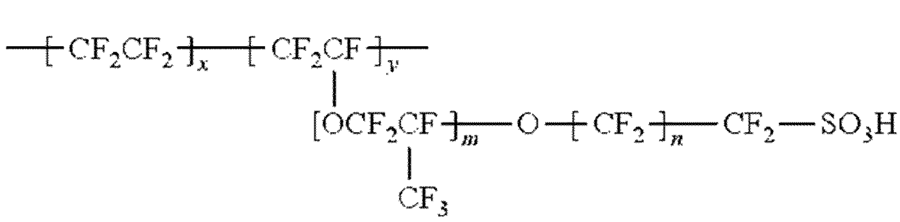

wherein x, y, m and n represent the numbers of repeat units, wherein m=0, n=1 and wherein the number of repeat units x and y are such that there are less than 15x units for each y. Preferably, said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15× units for each y. Preferably, said layer of a proton exchange membrane further comprises a glucose oxidase entrapped therein or any oxidase with hydrogen peroxide as its product.

Lastly, a yet further preferred embodiment of this example refers to the potentiometric sensor or cell of the previous aspect of the invention, wherein said potentiometric sensor or cell preferably comprises a support made of paper which in turn comprises the selective electrode and the reference electrode, thus providing a paper-based sensor. It is however noted that other supports such as plastic, rubber, and textile can be used to practice the present invention. It is, of course, further noted that such paper-based sensors can be, for example, used to selectively and directly determine the concentration of hydrogen peroxide in an aqueous solution, wherein preferably said aqueous solution is a biological fluid such as whole blood, preferably undiluted whole blood, intracellular fluids, saliva blood sera and urine. In particular, said selective and direct determination of the concentration of hydrogen peroxide in an aqueous solution in turn determines the concentration of glucose, galactose, cholesterol, uric acid, lactic acid and amino acid in said solution.

## Brief description of the figures

**Figure 1:** Paper-based sensor configuration for hydrogen peroxide detection (right) and for glucose detection (left) a. Nafion® 5% membrane, b. Pt sputtered paper strip, c. Nafion® 10% d. Conductive paper strip, e. Plastic mask. f. GOx enzyme. In the left are the components of the sensor, and in the right the assembled sensor.

**Figure 2:** Response time of a sensor to concentration of hydrogen peroxide (logarithmic units) in PBS: left) time 2500 to 4000s refers to a sensor in a cell of 5 mL volume and right) time 4500 to 6500s refers to a single drop of 50 $\mu$L volume.

**Figure** 3: calibration curve of a sensor (corresponding to data from Figure 2) blue data obtained in solution (PBS 5 mL) and in drop (PBS 50 uL)

**Figure 4:** a) Time trace of glucose sensor and b) corresponding calibration curve in PBS (5 mL).

**Figure 5:** Traditional approach and for the detection of chemical species in solution by using potentiometric sensors.

**Figure 6.** A schematic view of such proposed configuration.

The following examples merely illustrate the present invention and do not limit the same.

## Examples

### Materials and methods

In this invention, a new cell geometry using metal-sputtered papers in working and reference electrodes, and a Nafion membrane as a conductive media, is applied in the construction of a paper- based potentiometric all-solid-state sensor for hydrogen peroxide detection, i.e. the biomarker of the oxidase enzyme reaction as well as, for glucose as a model biomarker.

### Experimental section

Reagents. Nafion® 117 solution (10% in a mixture of lower aliphatic alcohols and water); glucose oxidase (GOx)

(from Aspergillus niger type X-S, lyophilized powder (100,000 - 250.000 units/g) D-glucose); hydrogen peroxide (30 wt. % in water) and D-Glucose (Glu) were purchased from Sigma-Aldrich. Phosphate buffer saline (PBS) pH=7.4 (0.1 M NaCl, 0.003 M KCl, 0.1 M Na2HPO4, 0.02 M K2HPO4) were prepared using 18.2 MΩ cm-1 double deionized water (Milli-Q water systems, Merck Millipore).

Sputtered platinum paper. Whatman® Grade 5 qualitative filter paper circles were coated with Pt using a radiofrequency sputtering process (ATC Orion 8-HV, AJA International) operated at 3 mTorr, for 65 s at 200 W.

Paper sensor construction (Figure 1). two conductive paper strips are used, namely: the upper strip (made with a Pt sputtered paper) acts as WE (working electrode); the lower strip is a conducting paper that acts as reference electrode (RE). WE and RE are glued using a drop of Nafion® 10% (sandwiched between the plastic masks). Finally, a drop of Nafion® 5 % is located over the electrochemically active window, covering the exposed area of the WE. In all cases the conductive paper strips were cut with a width of 0.4 cm.

**Results**

**Hydrogen peroxide detection in solution and in drop**

Figure 2 shows the response and calibration curve for the novel sensors to the addition of H2O2 in PBS (5 mL cell). The bridge indeed connects the working to the reference electrode (Nafion solution). The additions give a negative response (from -7 to -1) with a sensitivity of -90 mV per decade in the linear range from -5 to -3 (Figure 3 reports the corresponding calibration curve). Importantly, these results confirm that the proposed potentiometric cell -using Nafion to connect WE and RE instead of the solutioneffectively closes the circuit and allows detecting H2O2 in solution. To the best of our knowledge, this is the first report for this kind of configuration for the detection of chemical species in solution.

Moreover, the novel configuration allows detection in reduced volume such as shown in Figure 2 right. The detection was performed in a single drop of 50 μL reducing the volume 2 order of magnitude. Noteworthy further reduction of volume down to the single μL is possible based on the geometry optimization. Analytical figures are comparable to the ones in solution although with a shifted linear range. The sensitivity here was 100 mV/dec in the -4 -2 linear range. Furthermore, the linear range corresponds to the clinical range of blood glucose and it is therefore of utmost importance.

**Glucose detection**

In addition, a glucose sensor was constructed: GOx enzyme was entrapped in the first layer of Nafion so that it catalyzes the oxidation of glucose added to the solution producing H2O2, which is detected by the working electrode. Figure 4a. shows the time trace obtained in artificial serum (AS). As expected, the measured EMF decreases with the increasing concentration of glucose (sensitivity of -53 mV/dec in the linear range -3.5 -2.5). Thus, this result confirms that the new configuration could be used for real application having an analytical performance similar to other reported glucose biosensors.

**Claims**

**1.** *An in vitro* method to determine the concentration of hydrogen peroxide in an aqueous solution, the method comprising:

a. providing the aqueous solution in contact with a hydrogen peroxide selective electrode of a potentiometric sensor or cell comprising:

i. A reference electrode comprising a support which in turn comprises a conductive material; and
ii. the hydrogen peroxide selective electrode comprising a porous redox sensitive surface consisting of platinum or gold,
wherein the hydrogen peroxide selective electrode is preferably positioned directly above the reference electrode,
wherein each of the electrodes is connected to the other by a polyelectrolyte bridge provided between the electrodes, wherein the surfaces of each of the electrodes that contact the polyelectrolyte bridge provided between the electrodes permits to effectively close the potentiometric circuit; and
wherein the polyelectrolyte bridge connecting the electrodes comprises or is made of polyelectrolytes such as perfluorosulfonic acid ionomers or polyammonium ionomers; and

b. measuring a potential difference between the reference electrode and the hydrogen peroxide selective

electrode; and

c. determining a concentration of hydrogen peroxide in the aqueous solution by evaluating the potential difference by using a voltmeter;

wherein the method is **characterized in that** instead of using the aqueous solution to close the potentiometric circuit between the two electrodes, the hydrogen peroxide selective electrode and the reference electrode (RE), the potentiometric cell uses the polyelectrolyte bridge to connect the electrodes instead of the solution.

**2.** The method according to claim 1, wherein the hydrogen peroxide selective electrode is positioned directly above the reference electrode.

**3.** The method according to claim 1 or 2, wherein the hydrogen peroxide selective electrode comprises a porous redox sensitive surface consisting of platinum.

**4.** The method according to any of claims 1 to 3, wherein the polyelectrolyte bridge connecting the electrodes comprises or is made of perfluorosulfonic acid ionomers.

**5.** The method according to any of the precedent method claims, wherein the reference electrode comprises a support which in turn comprises a conductive material selected from any of the following list consisting of: silver, platinum, gold, nickel, zinc, copper, aluminum and carbon.

**6.** The method according to any of the precedent method claims, wherein the reference electrode and the hydrogen peroxide selective electrode are made of the same material, preferably gold or platinum.

**7.** The method according to any of the precedent method claims, wherein the hydrogen peroxide selective electrode comprises a porous redox sensitive surface consisting of platinum or gold and at least one layer of a proton exchange membrane on said redox sensitive surface, wherein said layer of a proton exchange membrane comprises a copolymer of Formula (II),

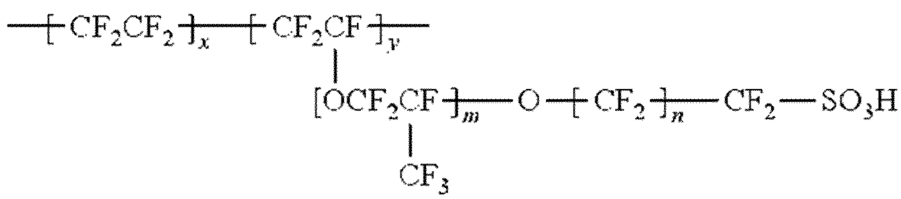

(II)

wherein x, y, m and n represent the numbers of repeat units, wherein m=0, n=1 and wherein the number of repeat units x and y are such that there are less than 15× units for each y.

**8.** The method according to claim 7, wherein said layer of a proton exchange membrane further comprises a glucose oxidase entrapped therein or any oxidase with hydrogen peroxide as its product.

**9.** A potentiometric cell to determine the concentration of hydrogen peroxide in an aqueous solution, wherein the potentiometric cell comprises:

i. A reference electrode comprising a support which in turn comprises a conductive material;

ii. A hydrogen peroxide selective electrode comprising a porous redox sensitive surface consisting of platinum or gold; and

iii. means to determine the concentration of hydrogen peroxide by measuring the potential difference;

wherein each of the electrodes is connected to the other by a polyelectrolyte bridge provided between the electrodes, wherein the surfaces of each of the electrodes that contact the polyelectrolyte bridge provided between the electrodes permits to effectively close the potentiometric circuit, so that instead of using the aqueous solution to close the potentiometric circuit between the two electrodes, the hydrogen peroxide selective electrode and the reference electrode (RE), the potentiometric cell uses the polyelectrolyte bridge to connect the electrodes instead of the aqueous solution.

**10.** The potentiometric cell according to claim 9, wherein the hydrogen peroxide selective electrode comprises a porous redox sensitive surface consisting of platinum.

**11.** The potentiometric cell according to any of claims 9 to 10, wherein the polyelectrolyte bridge connecting the electrodes comprises or is made of perfluorosulfonic acid ionomers.

**12.** The potentiometric cell according to any of claims 9 to 11, wherein the reference electrode and the hydrogen peroxide selective electrode are made of the same material, preferably gold or platinum.

**13.** The potentiometric cell according to any of claims 9 to 12, wherein the hydrogen peroxide selective electrode comprises a porous redox sensitive surface consisting of platinum or gold and at least one layer of a proton exchange membrane on said redox sensitive surface, wherein said layer of a proton exchange membrane comprises a copolymer of Formula (II),

(II)

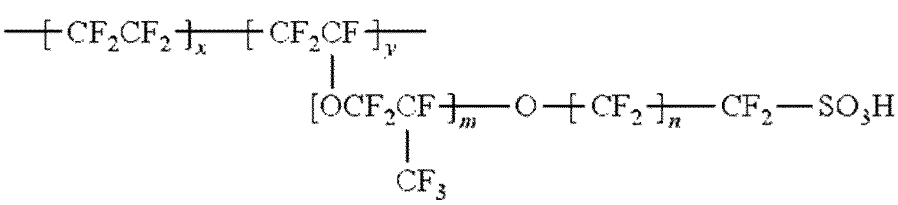

wherein x, y, m and n represent the numbers of repeat units, wherein m=0, n=1 and wherein the number of repeat units x and y are such that there are less than 15× units for each y.

**14.** The potentiometric cell according to claim 13, wherein said layer of a proton exchange membrane further comprises or conforms a mixture with a further PFSA copolymer selected from those of formula II wherein m=1 and n=1, or m=0 or 1 and n=1 to 5, or m=0 or 3 and n=2 to 5, or m=0 and n=2, and wherein x and y are such that there are less than 15× units for each y.

**15.** The potentiometric cell according to claim 13 or 14, wherein said layer of a proton exchange membrane further comprises a glucose oxidase entrapped therein or any oxidase with hydrogen peroxide as its product.

## Patentansprüche

**1.** *In-vitro*-Verfahren zur Bestimmung der Konzentration von Wasserstoffperoxid in einer wässrigen Lösung, wobei das Verfahren Folgendes umfasst:

a. das Bereitstellen der wässrigen Lösung in Kontakt mit einer Wasserstoffperoxid-selektiven Elektrode eines potentiometrischen Sensors oder einer potentiometrischen Zelle umfassend:

i. eine Referenzelektrode umfassend eine Stütze, welche wiederum ein leitfähiges Material umfasst; und
ii. die Wasserstoffperoxid-selektive Elektrode umfassend eine poröse redoxempfindliche Oberfläche, welche aus Platin oder Gold besteht,
wobei die Wasserstoffperoxid-selektive Elektrode vorzugsweise direkt über der Referenzelektrode platziert ist,
wobei jede der Elektroden mittels einer Polyelektrolyt-Brücke, welche zwischen den Elektroden bereitgestellt wird, mit der anderen verbunden ist, wobei die Oberflächen jeder der Elektroden, welche mit der Polyelektrolyt-Brücke in Kontakt kommen, welche zwischen den Elektroden bereitgestellt wird, es erlauben, den potentiometrischen Schaltkreis wirksam zu schließen; und
wobei die Polyelektrolyt-Brücke, welche die Elektroden verbindet, Polyelektrolyte wie Perfluorsulfonsäurelonomere oder Polyammonium-Ionomere umfasst oder daraus hergestellt ist; und

b. das Messen einer Potentialdifferenz zwischen der Referenzelektrode und der Wasserstoffperoxid-selektiven Elektrode; und
c. das Bestimmen einer Konzentration von Wasserstoffperoxid in der wässrigen Lösung, indem die Potentialdifferenz unter Verwendung eines Voltmeters beurteilt wird;

wobei das Verfahren **dadurch gekennzeichnet ist, dass** statt die wässrige Lösung zum Schließen des potentiometrischen Schaltkreises zwischen den beiden Elektroden, der Wasserstoffperoxid-selektiven Elektrode und der Referenzelektrode (RE), zu verwenden, die potentiometrische Zelle die Polyelektrolyt-Brücke zum Verbinden der Elektroden statt der Lösung verwendet.

**2.** Verfahren nach Anspruch 1, wobei die Wasserstoffperoxid-selektive Elektrode direkt über der Referenzelektrode platziert ist.

**3.** Verfahren nach Anspruch 1 oder 2, wobei die Wasserstoffperoxid-selektive Elektrode eine poröse redoxempfindliche Oberfläche bestehend aus Platin umfasst.

**4.** Verfahren nach einem der Ansprüche 1 bis 3, wobei die Polyelektrolyt-Brücke, welche die Elektroden verbindet, Perfluorsulfonsäure-Ionomere umfasst oder daraus hergestellt ist.

**5.** Verfahren nach einem der vorhergehenden Verfahrensansprüche, wobei die Referenzelektrode eine Stütze umfasst, welche wiederum ein leitfähiges Material ausgewählt aus einem der folgenden Liste umfasst, welche aus Folgenden besteht: Silber, Platin, Gold, Nickel, Zink, Kupfer, Aluminium und Kohlenstoff.

**6.** Verfahren nach einem der vorhergehenden Verfahrensansprüche, wobei die Referenzelektrode und die Wasserstoffperoxid-selektive Elektrode aus dem gleichen Material, vorzugsweise Gold oder Platin, hergestellt sind.

**7.** Verfahren nach einem der vorhergehenden Verfahrensansprüche, wobei die Wasserstoffperoxid-selektive Elektrode eine poröse redoxempfindliche Oberfläche umfasst, bestehend aus Platin oder Gold und mindestens einer Schicht einer Protonenaustauschmembran auf der genannten redoxempfindlichen Oberfläche, wobei die genannte Schicht einer Protonenaustauschmembran ein Copolymer der Formel (II) umfasst,

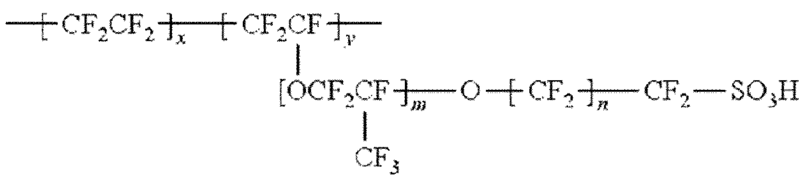

(II)

wobei x, y, m und n für die Nummern von Wiederholungseinheiten stehen, wobei m=0, n=1 und wobei die Nummer von Wiederholungseinheiten x und y derart sind, dass es weniger als 15x Einheiten für jedes y.

**8.** Verfahren nach Anspruch 7, wobei die genannte Schicht einer Protonenaustauschmembran zusätzlich eine darin gefangene Glucoseoxidase oder irgendeine Oxidase mit Wasserstoffperoxid als deren Produkt umfasst.

**9.** Potentiometrische Zelle zur Bestimmung der Konzentration von Wasserstoffperoxid in einer wässrigen Lösung, wobei die potentiometrische Zelle Folgendes umfasst:

i. eine Referenzelektrode umfassend eine Stütze, welche wiederum ein leitfähiges Material umfasst;
ii. eine Wasserstoffperoxid-selektive Elektrode umfassend eine poröse redoxempfindliche Oberfläche, welche aus Platin oder Gold besteht; und
iii. Mittel zur Bestimmung der Konzentration von Wasserstoffperoxid, indem die Potentialdifferenz gemessen wird;

wobei jede der Elektroden mittels einer Polyelektrolyt-Brücke, welche zwischen den Elektroden bereitgestellt wird, mit der anderen verbunden ist, wobei die Oberflächen jeder der Elektroden, welche mit der Polyelektrolyt-Brücke in Kontakt kommen, welche zwischen den Elektroden bereitgestellt wird, es erlauben, den potentiometrischen Schaltkreis wirksam zu schließen, sodass statt die wässrige Lösung zum Schließen des potentiometrischen Schaltkreises zwischen den beiden Elektroden, der Wasserstoffperoxid-selektiven Elektrode und der Referenzelektrode (RE), zu verwenden, die potentiometrische Zelle die Polyelektrolyt-Brücke zum Verbinden der Elektroden statt der wässrigen Lösung verwendet.

**10.** Potentiometrische Zelle nach Anspruch 9, wobei die Wasserstoffperoxid-selektive Elektrode eine poröse redoxempfindliche Oberfläche bestehend aus Platin umfasst.

**11.** Potentiometrische Zelle nach einem der Ansprüche 9 bis 10, wobei die Polyelektrolyt-Brücke, welche die Elektroden verbindet, Perfluorsulfonsäure-Ionomere umfasst oder daraus hergestellt ist.

**12.** Potentiometrische Zelle nach einem der Ansprüche 9 bis 11, wobei die Referenzelektrode und die Wasserstoffperoxid-selektive Elektrode aus dem gleichen Material, vorzugsweise Gold oder Platin, hergestellt sind.

**13.** Potentiometrische Zelle nach einem der Ansprüche 9 bis 12, wobei die Wasserstoffperoxid-selektive Elektrode eine poröse redoxempfindliche Oberfläche umfasst, bestehend aus Platin oder Gold und mindestens einer Schicht einer Protonenaustauschmembran auf der genannten redoxempfindlichen Oberfläche, wobei die genannte Schicht einer Protonenaustauschmembran ein Copolymer der Formel (II) umfasst,

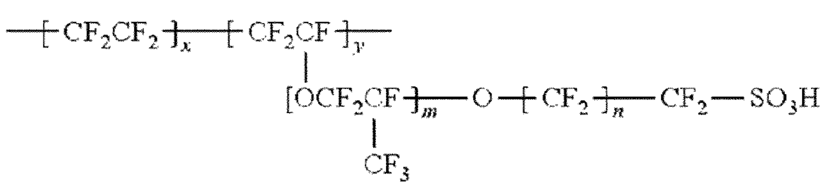

(II)

wobei x, y, m und n für die Nummern von Wiederholungseinheiten stehen, wobei m=0, n=1 und wobei die Nummer von Wiederholungseinheiten x und y derart sind, dass es weniger als 15x Einheiten für jedes y gibt.

**14.** Potentiometrische Zelle nach Anspruch 13, wobei die genannte Schicht einer Protonenaustauschmembran zusätzlich eine Mischung mit einem zusätzlichen PFSA-Copolymer ausgewählt aus denjenigen der Formel II umfasst oder bildet, wobei m=1 und n=1, oder m=0 oder 1 und n=1 bis 5, oder m=0 oder 3 und n=2 bis 5, oder m=0 und n=2, und wobei x und y derart sind, dass es weniger als 15x Einheiten für jedes y gibt.

**15.** Potentiometrische Zelle nach Anspruch 13 oder 14, wobei die genannte Schicht einer Protonenaustauschmembran zusätzlich eine darin gefangene Glucoseoxidase oder irgendeine Oxidase mit Wasserstoffperoxid als deren Produkt umfasst.

## Revendications

**1.** Procédé *in vitro* pour déterminer la concentration de peroxyde d'hydrogène dans une solution aqueuse, le procédé comprenant :

a. fournir la solution aqueuse en contact avec une électrode sélective de peroxyde d'hydrogène d'une cellule ou capteur potentiométrique comprenant :

i. une électrode de référence comprenant un support qui comprend à son tour un matériau conducteur ; et
ii. l'électrode sélective de peroxyde d'hydrogène comprenant une surface poreuse sensible à l'oxydoréduction constituée du platine ou de l'or,
dans lequel l'électrode sélective de peroxyde d'hydrogène est de préférence positionnée directement sur l'électrode de référence,
dans lequel chacune des électrodes est reliée à l'autre par un pont de polyélectrolyte prévu entre les électrodes, dans lequel les surfaces de chacune des électrodes qui entrent en contact avec le pont de polyélectrolyte fourni entre les électrodes permettent de fermer efficacement le circuit potentiométrique ; et dans lequel le pont de polyélectrolyte reliant les électrodes comprend ou est constitué de polyélectrolytes tels que des ionomères d'acide perfluorosulfonique ou des ionomères de polyammonium ; et

b. mesurer une différence de potentiel entre l'électrode de référence et l'électrode sélective de peroxyde d'hydrogène ; et
c. déterminer une concentration de peroxyde d'hydrogène dans la solution aqueuse par évaluation de la différence de potentiel en utilisant un voltmètre ;

dans lequel le procédé est **caractérisé en ce qu'**au lieu d'utiliser la solution aqueuse pour fermer le circuit potentiométrique entre les deux électrodes, l'électrode sélective de peroxyde d'hydrogène et l'électrode de référence (RE), la cellule potentiométrique utilise le pont de polyélectrolyte pour relier les électrodes au lieu de la solution.

**2.** Procédé selon la revendication 1, dans lequel l'électrode sélective de peroxyde d'hydrogène est positionnée directement sur l'électrode de référence.

**3.** Procédé selon la revendication 1 ou 2, dans lequel l'électrode sélective de peroxyde d'hydrogène comprend une surface poreuse sensible à l'oxydoréduction constituée du platine.

**4.** Procédé selon l'une quelconque des revendications 1 à 3, dans lequel le pont de polyélectrolyte reliant les électrodes comprend ou est constitué d'ionomères d'acide perfluorosulfonique.

**5.** Procédé selon l'une quelconque des revendications de procédé précédentes, dans lequel l'électrode de référence comprend un support qui comprend à son tour un matériau conducteur choisi parmi l'un quelconque de la liste suivante constituée de : l'argent, le platine, l'or, le nickel, le zinc, le cuivre, l'aluminium et le carbone.

**6.** Procédé selon l'une quelconque des revendications de procédé précédentes, dans lequel l'électrode de référence et l'électrode sélective de peroxyde d'hydrogène sont constituées du même matériau, de préférence de l'or ou du platine.

**7.** Procédé selon l'une quelconque des revendications de procédé précédentes, dans lequel l'électrode sélective de peroxyde d'hydrogène comprend une surface poreuse sensible à l'oxydoréduction constituée du platine ou de l'or et au moins une couche d'une membrane échangeuse de protons sur ladite surface sensible à l'oxydoréduction, dans lequel ladite couche d'une membrane échangeuse de protons comprend un copolymère de formule (II),

(II)

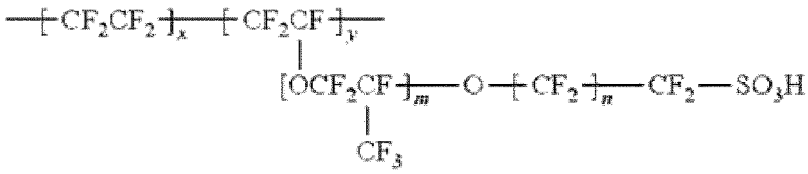

dans laquelle x, y, m et n représentent les nombres d'unités de répétition, dans laquelle m=0, n=1 et dans laquelle le nombre d'unités de répétition x et y sont tels qu'il y a moins de 15 unités x pour chaque y.

**8.** Procédé selon la revendication 7, dans lequel ladite couche d'une membrane échangeuse de protons comprend en outre une glucose oxydase piégée dans celle-ci ou toute oxydase ayant du peroxyde d'hydrogène comme produit.

**9.** Cellule potentiométrique pour déterminer la concentration de peroxyde d'hydrogène dans une solution aqueuse, dans laquelle la cellule potentiométrique comprend :

i. une électrode de référence comprenant un support qui comprend à son tour un matériau conducteur ;
ii. une électrode sélective de peroxyde d'hydrogène comprenant une surface poreuse sensible à l'oxydoréduction constituée du platine ou de l'or ; et
iii. des moyens pour déterminer la concentration de peroxyde d'hydrogène en mesurant la différence de potentiel ;

dans laquelle chacune des électrodes est reliée à l'autre par un pont de polyélectrolyte prévu entre les électrodes, dans laquelle les surfaces de chacune des électrodes qui entrent en contact avec le pont de polyélectrolyte fourni entre les électrodes permettent de fermer efficacement le circuit potentiométrique, de sorte qu'au lieu d'utiliser la solution aqueuse pour fermer le circuit potentiométrique entre les deux électrodes, l'électrode sélective de peroxyde d'hydrogène et l'électrode de référence (RE), la cellule potentiométrique utilise le pont de polyélectrolyte pour relier les électrodes au lieu de la solution aqueuse.

**10.** Cellule potentiométrique selon la revendication 9, dans laquelle l'électrode sélective de peroxyde d'hydrogène comprend une surface poreuse sensible à l'oxydoréduction constituée du platine.

**11.** Cellule potentiométrique selon l'une quelconque des revendications 9 à 10, dans laquelle le pont de polyélectrolyte reliant les électrodes comprend ou est constitué d'ionomères d'acide perfluorosulfonique.

**12.** Cellule potentiométrique selon l'une quelconque des revendications 9 à 11, dans laquelle l'électrode de référence et l'électrode sélective de peroxyde d'hydrogène sont constitués du même matériau, de préférence de l'or ou du platine.

**13.** Cellule potentiométrique selon l'une quelconque des revendications 9 à 12, dans laquelle l'électrode sélective de peroxyde d'hydrogène comprend une surface poreuse sensible à l'oxydoréduction constituée du platine ou de l'or et au moins une couche d'une membrane échangeuse de protons sur ladite surface sensible à l'oxydoréduction, dans laquelle ladite couche d'une membrane échangeuse de protons comprend un copolymère de formule (II),

(II)

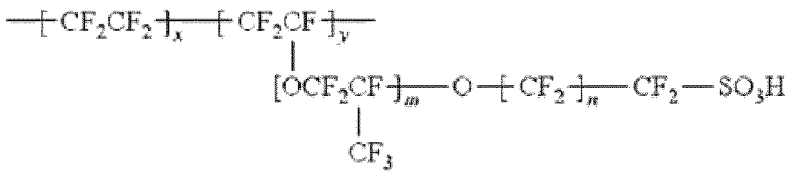

dans laquelle x, y, m et n représentent les nombres d'unités de répétition, dans laquelle m=0, n=1 et dans laquelle le nombre d'unités de répétition x et y sont tels qu'il y a moins de 15 unités x pour chaque y.

**14.** Cellule potentiométrique selon la revendication 13, dans laquelle ladite couche d'une membrane échangeuse de protons comprend en outre ou conforme un mélange avec un copolymère de PFSA additionnel choisi parmi ceux de formule II dans laquelle m=1 et n=1, ou m=0 ou 1 et n=1 à 5, ou m=0 ou 3 et n=2 à 5, ou m=0 et n=2, et dans laquelle x et y sont tels qu'il y a moins de 15 unités x pour chaque y.

**15.** Cellule potentiométrique selon la revendication 13 ou 14, dans laquelle ladite couche d'une membrane échangeuse de protons comprend en outre une glucose oxydase piégée dans celle-ci ou toute oxydase ayant du peroxyde d'hydrogène comme produit.

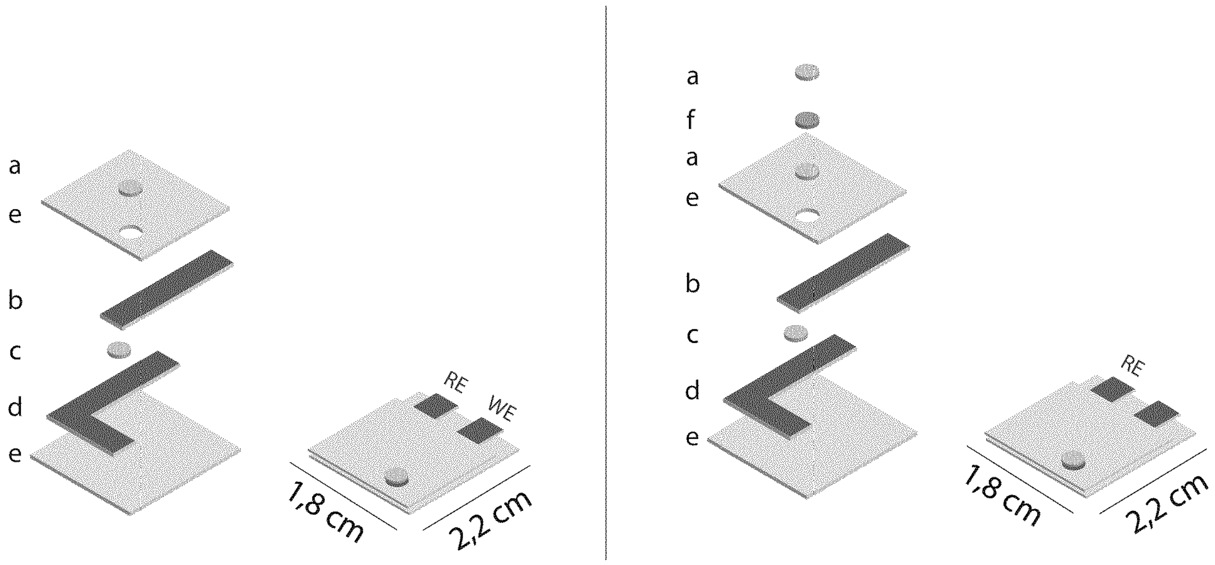
a
e
b
c
d
e
RE
WE
1,8 cm
2,2 cm
a
f
a
e
b
c
d
e
RE
1,8 cm
2,2 cm

**Fig. 1**

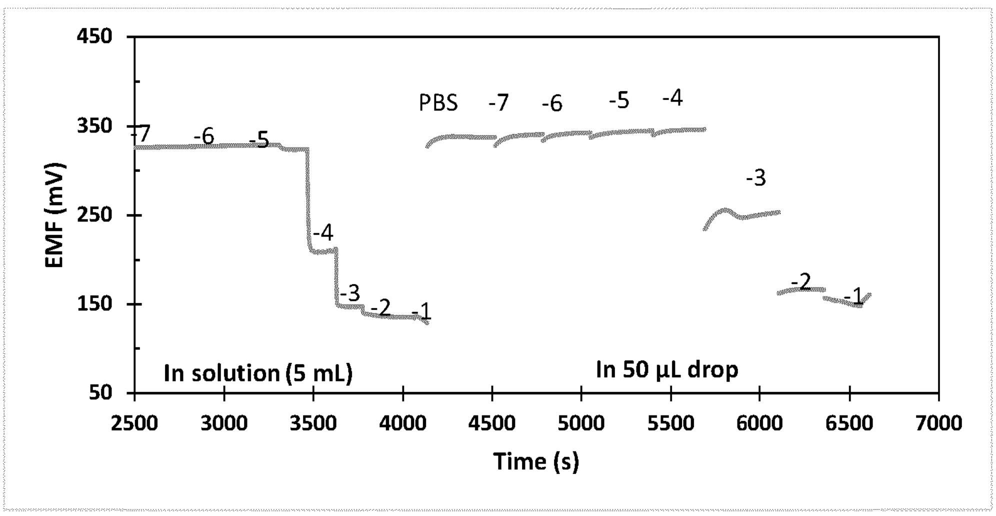
450
350
250
150
50
EMF (mV)
-7
-6
-5
-4
-3
-2
-1
PBS
-7
-6
-5
-4
-3
-2
-1
In solution (5 mL)
In 50 µL drop
2500
3000
3500
4000
4500
5000
5500
6000
6500
7000
Time (s)

**Fig. 2**

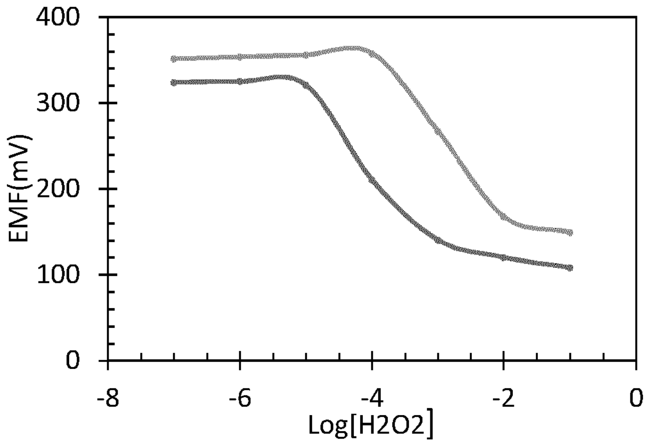
400
300
200
100
0
EMF(mV)
-8
-6
-4
-2
0
Log[H2O2]

Fig. 3

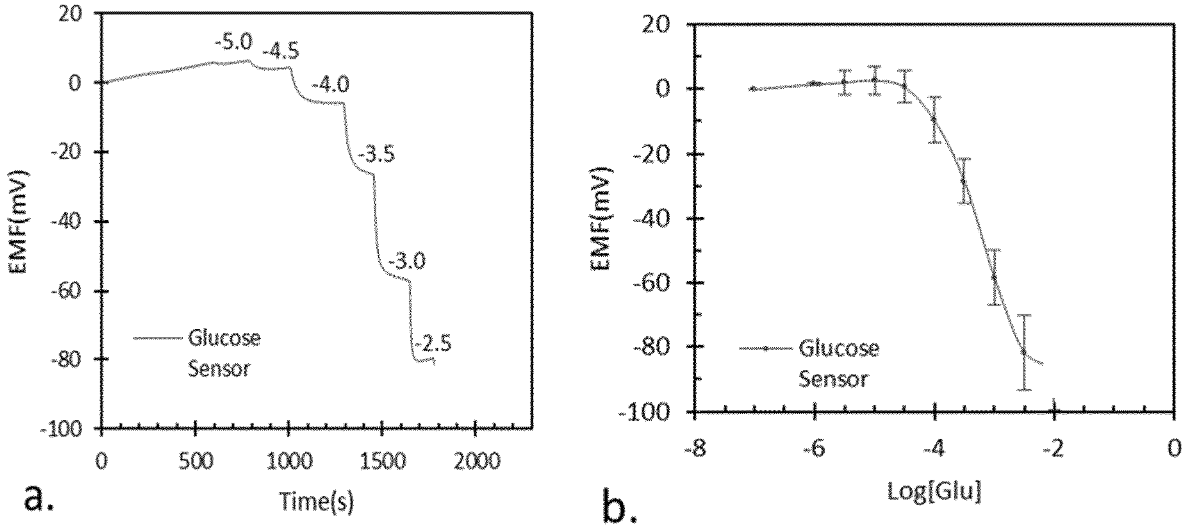
20
0
-20
-40
-60
-80
-100
EMF(mV)
-5.0
-4.5
-4.0
-3.5
-3.0
-2.5
Glucose Sensor
0
500
1000
1500
2000
Time(s)
a.
20
0
-20
-40
-60
-80
-100
EMF(mV)
Glucose Sensor
-8
-6
-4
-2
0
Log[Glu]
b.

Fig. 4

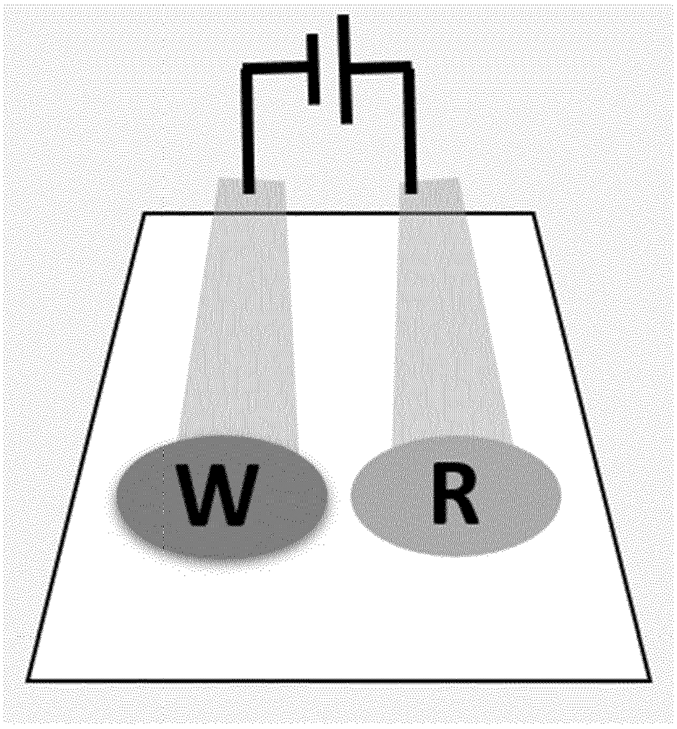


Fig. 5

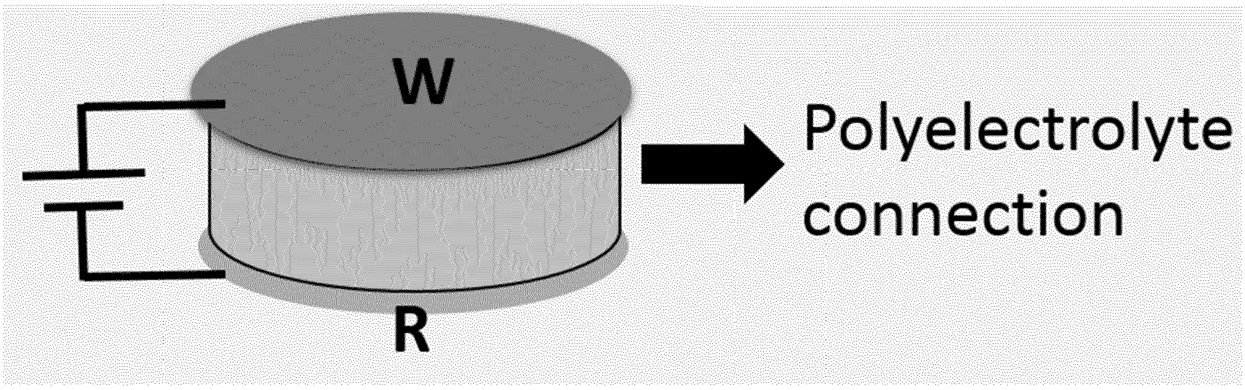


Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BAEZ et al.** *Analytica Chimica Acta*, 2020, vol. 1097, 204-213
- **MERUVA** ; **MEYERHOFF**. *Anal Chem*, 1996, vol. 68, 2022-2026
- **I KATSOUNAROS** ; **WB SCHNEIDER** ; **JC MEIER** ; **U BENEDIKT** ; **PU BIEDERMANN** ; **AA AUER** ; **KJJ MAYRHOFER**. *Phys. Chem. Chem. Phys.*, 2012, vol. 14, 7384
- **NM MARKOVIC** ; **PN ROSS JR**. *Surface Science Reports*, 2002, vol. 45, 117